# EUROPÄISCHE PATENTANMELDUNG

(11) **EP 0 990 876 A1**
(43) Veröffentlichungstag der Anmeldung: **05.04.2000**
(21) Anmeldenummer: 99118283.3
(22) Anmeldetag: 15.09.1999
(51) Int. Cl.: G01F 1/58

(54) **Durchflussmessaufnehmer, insbesondere induktiver Durchflussmessaufnehmer sowie Verfahren zu seiner Herstellung**

(30) Priorität: 02.10.1998 DE 19845346
(71) Anmelder: Bailey-Fischer & Porter GmbH, 37079 Göttingen (DE)
(72) Erfinder: Mündemann, Sven Oliver, 37083 Göttingen (DE)
(74) Vertreter: Marks, Frank

(57) **Zusammenfassung**

Die Erfindung betrifft einen Verfahren zur Herstellung eines Durchflussmeßaufnehmers, insbesondere eines induktiven Durchflussmeßaufnehmers, bei welchem die Einzelkomponenten Gehäuse, Magnetsystem und Meßrohr zu montieren sind, sowie einen Durchflußmeßaufnehmer, insbesondere induktiver Durchflussmeßaufnehmer, mit einem als Sende-/Detektionsmitteln arbeitenden Magnetsystem, welches um einen von einem zu messenden Medium durchflossenen Rohrabschnitt angeordnet ist, wobei das Magnetsystem samt Rohrabschnitt wiederrum innerhalb eines Gehäuses bzw. eines Gehäusemantels angeordnet sind, gemäß Oberbegriff der Patentansprüche 1 und 2. Um zu erreichen, daß die Vorfertigung und damit die Fertigung einer speziellen Applikation jeweils einfach möglich ist, ist erfindungsgemäß vorgeschlagen, daß daß das Magnetsystem zunächst innerhalb des Gehäuses bzw. eines Gehäuseteiles eingebracht und dort befestigt wird, und daß nachfolgend das Meßrohr eingesetzt und sodann beides mit einem flanschartigen Deckel verschlossen und in Solllage gesichert wird.

## Beschreibung

Die Erfindung betrifft einen Verfahren zur Herstellung eines Durchflussmeßaufnehmers, insbesondere eines induktiven Durchflussmeßaufnehmers, bei welchem die Einzelkomponenten Gehäuse, Magnetsystem und Meßrohr zu montieren sind, sowie einen Durchflussmeßaufnehmer, insbesondere induktiver Durchflussmeßaufnehmer, mit einem als Sende-/Detektionsmitteln arbeitenden Magnetsystem, welche um ein von einem zu messenden Medium durchflossenen Rohrabschnitt angeordnet sind, wobei das Magnetsystem samt Rohrabschnitt wiederum innerhalb eines Gehäuses bzw. Gehäusemantels angeordnet sind, gemäß Oberbegriff der Patentansprüche 1 und 2.

Induktive Durchflußmeßaufnehmer weisen ein Sende-/Detektions- oder Empfangsmittel auf, welches um einen Rohrabschnitt angeordnet ist durch welches das zu messende Medium hindurchfließt. Die Existenz des Mediums sowie auch der Volumendurchsatz pro Zeiteinheit, gegebenenfalls auch die Dichte, erzeugen im magnetischen oder kapazitiven Kreis auf ein Sendesignal ein entsprechendes Antwortsignal induktiver oder kapazitiver Art. Dieses Antwortsignal ist sodann auswertbar und mittels einer nachfolgenden Auswerteeinheit ist aus der Antwortfunktion der Durchfluß und gegebenenfalls andere, oben bereits erwähnte Größen ermittelbar.

Bekanntermaßen bildet der Rohrabschnitt und das Sende-/Detektionsmittel in Form beispielsweise eines Magnetsystems eine für sich separate Baueinheit, die wiederum von einem Gehäuse oder Gehäusemantel umgeben ist. Der Gehäusemantel läßt dabei an zwei in der Regel gegenüberliegenden Seiten eine flanschbare Öffnung, über welche der Meßrohrabschnitt mit demjenigen Leitungssystem verbindbar ist, in welchem beispielsweise der Durchfluß zu bestimmen ist. Die Stirnseiten im Flanschbereich sowie der Außenmantel schließen das Gerät so ab, daß ein für sich separates, zumindest staubdicht abgeschlossenes Gesamtgehäuse entsteht.

Der besagte Rohrabschnitt wird nachfolgend als Meßrohr bezeichnet und weist je nach Meßaufgabe und gewünschter Meßspanne eine entsprechende Nennweite auf. Diese Nennweite kann je nach Meßaufgabe variieren, weil das Meßsystem vorzugsweise unter Beibehaltung der Kontinuität der Strömung innerhalb des zu vermessenden Leitungssystems erhalten bleiben soll.

Es ist bekannt, das Magnetsystem direkt auf einem Meßrohr zu befestigen. Bei der Verwendung unterschiedlicher Meßrohre oder unterschiedlicher Nennweiten aus besagten Gründen muß bei dieser bekannten Meßanordnung stets das Magnetsystem auf das verwendete Rohrsystem angepaßt sein.

Neben der Verwendung unterschiedlicher Nennweiten kommen je nach Meßaufgabe auch die Verwendung unterschiedlicher Rohrauskleidungen für das Maßrohr in Frage.

Um besagte Geräte auch bei individuellem Kundenwunsch schnell fertigen zu können, werden, wie in anderen Bereichen der Technik auch, wichtige Komponenten bereits vorgefertigt, um die Endmontage schneller und einfacher gestalten zu können.

Kundenspezifische Applikationen richten sich in den allermeisten Fällen bei magnetischen Durchflussmeßaufnehmern auf das entsprechende Meßrohr, insbesondere auf die Auskleidung desselben. Dies hängt unter anderem vom zu messenden Medium und gegebenenfalls von Temperatur und weiteren Parametern ab. Um eine schnelle Fertigung spezifisch applizierter Geräte zu ermöglichen, müßten unterschiedliche Meßrohre jeweils bereits mit fest montiertem Magnetsystem verbunden und vorgefertigt sein.

Dies ist jedoch in dieser Form aus wirtschaftlichen Gründen kaum darstellbar.

Der Erfindung liegt somit die Aufgabe zugrunde, einen gattungsgemäßen Durchflussmeßaufnehmer sowie ein gattungsgemäßes Verfahren zur Herstellung desselben dahingehend zu verbessern, daß die Vorfertigung und damit die Fertigung einer speziellen Applikation jeweils einfach möglich ist.

Bei einem Verfahren der gattungsgemäßen Art ist die gestellte Aufgabe erfindungsgemäß durch die kennzeichnenden Merkmale des Patentanspruches 1 gelöst.

Bei einem Durchflussmeßaufnehmer, insbesondere einem induktiven Durchflussmeßaufnehmer der gattungsgemäßen Art ist die gestellte Aufgabe erfindungsgemäß durch die kennzeichnenden Merkmale des Patentanspruches 2 gelöst.

Vorteilhafte Ausgestaltungen des Verfahrens sowie des Durchflussmeßaufnehmers sind in den übrigen Patentansprüchen angegeben.

Durch die Befestigung des Sende-/Detektionsmittels, bei induktiven Durchflußmeßaufnehmern ist damit das Magnetsystem gemeint - direkt im Gehäuse bzw. im Gehäusemantel wird erreicht, daß die wesentlichen Durchflussmeßaufnehmerkomponenten unabhängig vom jeweils gewünschten Meßrohr vorgefertigt werden können. Innerhalb des Gehäuses, in welches das Magnetsystem eingebracht wird, sind entsprechende Führungsanschläge eingebracht, die den Abstand zwischen Polblech und Gehäuse definieren.

So kann beispielsweise bei der Vorfertigung der besagten Magnetsysteme in den Gehäusen ein entsprechender Polschuhabstand eingestellt werden, so daß hernach beliebige Meßrohre mit unterschiedlicher Auskleidung, je nach spezifischer Applikation, einsetzbar sind.

Insgesamt ist die Meßanordnung auch nachträglich leicht variierbar auf verschiedene Meßeinsätze, sprich auf verschiedene Auskleidungen.

Die Erfindung ist in der Zeichnung dargestellt und nachfolgend näher beschrieben.

Es zeigt:
- Figur 1: Detaildarstellung, Einbringung des Magnetsystems in das Gehäuse.
- Figur 2: In das Gehäuse vormontiertes Magnetsystem.
- Figur 3: Schnittdarstellung eines komplett gefertigten Durchflußmeßaufnehmers.

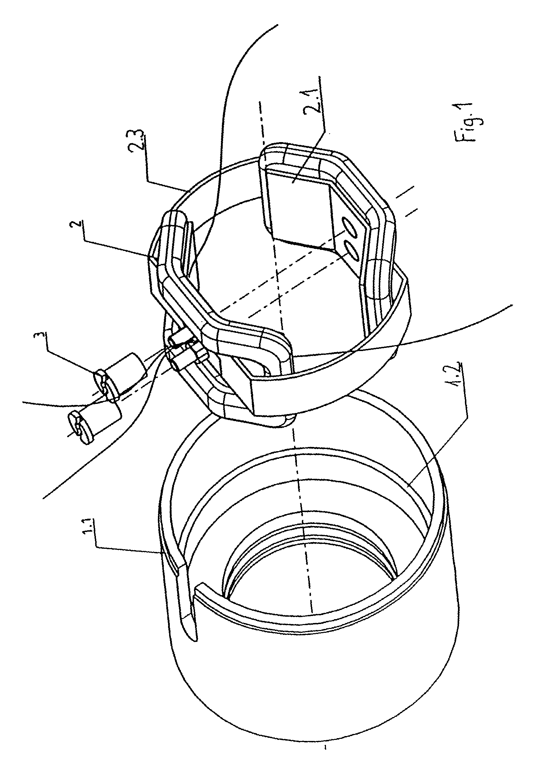

Figur 1 zeigt das Magnetsystem, bestehend aus zwei Spulen 2, die sich über einen damit magnetschlüssig verbundenen Rückführbügel 2.3 diametral gegenüber liegen. Des weiteren sind die beiden Spulen 2 jeweils mit sogenannten Polblechen 2.1 versehen. Diese führen das erzeugte elektromagnetische Feld direkt an die Außenwandung des später einzuführenden Meßrohres heran. Die Kabel der beiden Spulen 2 werden an einer Seite zusammengeführt und aus dem Gehäuse 1.1 an einer Seite herausgeführt. Des weiteren sind Meßelektroden vorgesehen, die hier nicht weiter dargestellt sind. Diese Meßelektroden sind bekanntermaßen durch das Meßrohr hindurchgeführt, so daß die selben in den Innenraum des Meßrohres austreten und Berührung mit dem Meßmedium haben. Die besagten Elektroden sind dabei durch die Wandung des Meßrohres nach außen geführt und dort mit entsprechenden Kabeln versehen, die ebenfalls mit den anderen Kabeln des Magnetsystems 2 aus dem Gehäuse 1.1 an der besagten definierten Stelle herausgeführt werden.

Mit entsprechenden Halteelementen 3, die mit komplementär zusammenwirkenden Bolzen oder Kontaktstiften am Magnetkreis 2 verbunden werden, ist die Arretierung des Magnetsystems innerhalb des Gehäuses 1.1 vorgenommen. Das Magnetsystem 2 wird in der beschriebenen Weise in das Gehäuse 1.1 eingebaut und damit verbunden. Um das Magnetsystem nun in die gewünschte Position zu bringen und dort auch ortsfest zu halten, ist im Innenmantelbereich des Gehäuses 1.1 ein Anschlagring 1.2 angeformt. Dieser sichert die axiale Position des Magnetsystems.

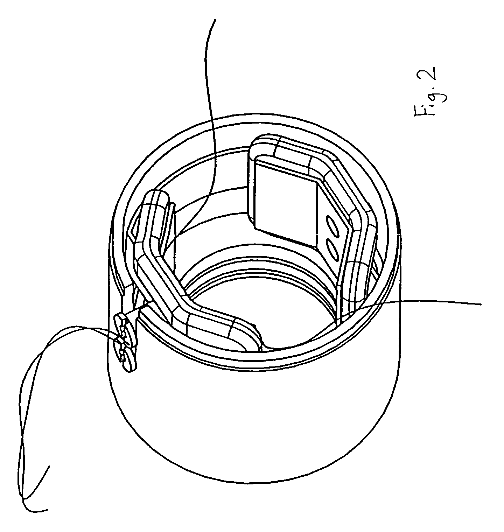

Figur 2 zeigt die vormontierte Anordnung des erfindungsgemäßen Durchflußmeßaufnehmers. Das Magnetsystem ist in bereits beschriebener Weise eingeschoben und die Halteelemente 3 arretieren nun das Magnetsystem im Gehäuse. Ein entsprechender Abstand bzw. eine entsprechende Position der Polschuhe bzw. Polbleche 2.1 ist in diesem Stadium der Fertigung bereits auf die zu verwendenden Meßrohre, die sich durch unterschiedliche Innendurchmesser, im wesentlichen jedoch durch unterschiedliche Auskleidungen unterscheiden, angepaßt.

Figur 2 zeigt jedoch erst einen Teil der später fertigen Anordnung. Jedoch ist es dieser Teil, welcher im gewünschten vorgefertigten Zustand vorliegt.

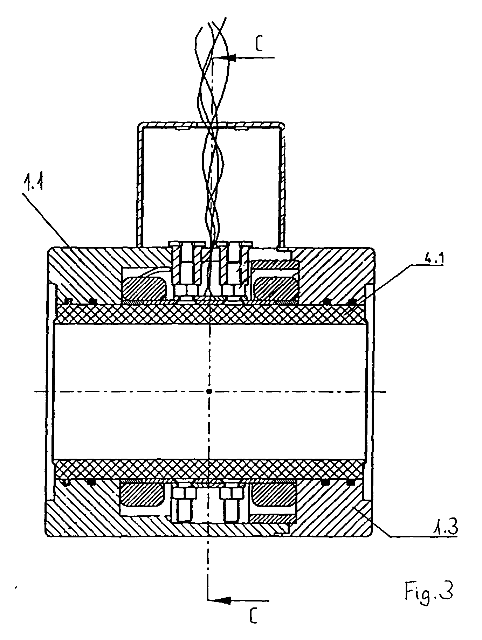

Figur 3 zeigt den endgültig gefertigten Durchflußmeßaufnehmer. Hierbei ist zu erkennen, daß das Gehäuse aus einem ersten Gehäuse Teil 1.1 und einem zweiten flanschartigen Deckel 1.3 der mittig eine Meßrohröffnung aufweist, zusammengefügt ist. Innerhalb wird dann das Meßrohr 4.1 eingesetzt. Der besagte Deckel 1.3 wird erst aufgesetzt, wenn die vorgefertigte Baugruppe gemäß Fig. 2 gefertigt ist.

Zuvor oder während dem wird sodann das Meßrohr eingesetzt und das gesamte Gehäusesystem verschlossen bzw. abgedichtet. Dies erfolgt durch Dichtungsringe.

## Patentansprüche

1. Verfahren zur Herstellung eines Durchflussmeßaufnehmers, insbesondere eines induktiven Durchflußmeßaufnehmers, bei welchem die Einzelkomponenten Gehäuse, Magnetsystem und Meßrohr zu montieren sind,
**dadurch gekennzeichnet**,
daß das Magnetsystem zunächst innerhalb des Gehäuses bzw. eines Gehäuseteiles eingebracht und dort befestigt wird, und daß nachfolgend das Meßrohr eingesetzt und sodann beides mit einem flanschartigen Deckel verschlossen und in Solllage gesichert wird.

2. Durchflussmeßaufnehmer, insbesondere induktiver Durchflussmeßaufnehmer, mit einem als Sende-/Detektionsmittel arbeitenden Magnetsystem, welches um einen von einem zu messenden Medium durchflossenen Rohrabschnitt angeordnet ist, wobei das Magnetsystem samt Rohrabschnitt wiederum innerhalb eines Gehäuses bzw. Gehäusemantels angeordnet sind,
**dadurch gekennzeichnet,**
daß das Magnetsystem (2) direkt im Gehäuse (1.1) bzw. im Gehäusemantel befestigt ist.

3. Durchflussmeßaufnehmer nach Anspruch 2,
dadurch gekennzeichnet,
daß Meßrohre (4.1) unterschiedlicher Beschaffenheit in die vorgefertigte Magnetsystem-Gehäuse-Baueinheit einbringbar ist.

4. Durchflussmeßaufnehmer nach Anspruch 3,
dadurch gekennzeichnet,
daß Befestigungselemente (2.4) des Magnetsystems (2) durch einen in Einschiebrichtung im Gehäuse in Längsrichtung angeordneten Schlitz durchschiebbar und mit komplementär zusammenwirkenden Halteelementen (3) verbindbar sind, so daß das Magnetsystem (2) im Gehäuse dadurch verdrehgesichert positioniert ist.

5. Durchflussmeßaufnehmer nach einem der vorhergehenden Ansprüche,
dadurch gekennzeichnet,
daß im Gehäuse (1.1) auf der Innenmantelfläche Anschlagmittel (1.2) angeformt sind, derart, daß das Magnetsystem hierdurch in axialer Sollposition gehalten wird.
